Europäisches Patentamt

European Patent Office

Office européen des brevets

(19)

(11) **EP 1 147 309 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(21) Anmeldenummer: **99960785.6**

(22) Anmeldetag: **16.10.1999**

(51) Int Cl.⁷: **F02P 5/152**

(86) Internationale Anmeldenummer:
**PCT/DE1999/003330**

(87) Internationale Veröffentlichungsnummer:
**WO 2000/043670 (27.07.2000 Gazette 2000/30)**

(54) **VORRICHTUNG ZUM UNTERDRÜCKEN VON MOTORKLOPFEN EINER BRENNKRAFTMASCHINE**

DEVICE FOR SUPPRESSING ENGINE KNOCKING IN AN INTERNAL COMBUSTION ENGINE

DISPOSITIF POUR SUPPRIMER LE COGNEMENT DANS UN MOTEUR A COMBUSTION INTERNE

(84) Benannte Vertragsstaaten:
**DE ES FR GB IT**

(30) Priorität: **21.01.1999 DE 19902209**

(43) Veröffentlichungstag der Anmeldung:
**24.10.2001 Patentblatt 2001/43**

(73) Patentinhaber: **ROBERT BOSCH GMBH**
**70442 Stuttgart (DE)**

(72) Erfinder:
• **FRANKE, Steffen**
  **Brentwood, Essex CM14 5BT (GB)**
• **TORNO, Oskar**
  **D-71701 Schwieberdingen (DE)**
• **HEINSTEIN, Axel**
  **D-71299 Wimsheim (DE)**
• **KLUTH, Carsten**
  **D-70469 Stuttgart (DE)**
• **HAEMING, Werner**
  **D-74861 Neudenau (DE)**
• **BAEUERLE, Michael**
  **D-71706 Markgroeningen (DE)**

(56) Entgegenhaltungen:
DE-A- 4 401 828     US-A- 4 694 800
US-A- 5 265 574     US-A- 5 445 127
US-A- 5 503 126

**Beschreibung**

STAND DER TECHNIK

Die vorliegende Erfindung betrifft eine Vorrichtung zum Unterdrücken von Motorklopfen einer Brennkraftmaschine.

Obwohl auf beliebige Brennkraftmaschinen anwendbar, werden die vorliegende Erfindung sowie die ihr zugrundeliegende Problematik in bezug auf eine Brennkraftmaschine eines Kraftfahrzeuges erläutert.

Aus der DE 34 204 65 C2 ist eine Vorrichtung zum Unterdrükken von Motorklopfen einer Brennkraftmaschine bekannt. Bei dieser bekannten Vorrichtung werden Betriebsparameter der Brennkraftmaschine erfaßt, und aufgrund dieser erfaßten Betriebsparameter werden in einer Steuereinheit die jeweiligen Stellgrößen für die zu steuernden Vorgänge, wie insbesondere Zündung und Einspritzung, ermittelt. So wird beispielsweise anhand von Drehzahl und anliegender Last der optimale Zündzeitpunkt berechnet.

Bei der bekannten Vorrichtung ist außerdem ein Klopfdetektor vorgesehen, der die Verbrennungsgeräusche zylinderindividuell erfaßt. Die Signale den Klopfdetektors werden an eine Klopfsignalausschalteschaltung weitergeleitet und dort nach dem Herausfiltern der Hintergrundgeräusche mit einem Referenzpegel verglichen. Wurde eine klopfende Verbrennung erkannt, so wird der anhand von Drehzahl und Last bestimmte Zündzeitpunkt in diesem Zylinder für eine Klopfunterdrükkung in Richtung spät und damit von der Klopfgrenze weg verstellt. Nach einer vorgehbaren Anzahl klopffreier Verbrennungen wird dieser veränderte Zündzeitpunkt wieder schrittweise an die vom Steuergerät bestimmte Stellgröße herangeführt. Da die Gefahr von klopfenden Verbrennungen bei kaltem Motor nicht besteht, ist es üblich, die Klopfregelung erst ab dem Erreichen einer vorgebbaren Motortemperatur, also nach dem Warmlauf der Brennkraftmaschine, aktiv zu schalten. Unterhalb dieser Freigabetemperatur kann mit Sicherheit kein Klopfen auftreten, da die thermischen Verhältnisse im Brennraum dies nicht zulassen.

In der US-A-5 445 127 wird ein Verfahren beschrieben, bei dem ein Dynamikvorhalt abhängig von der Last aus einer Tabelle im ROM des Steuergeräts ausgelesen wird. Eine Anpassung des Kennfelds ist nicht vorgesehen.

In der DE 44 01 828 A1 ist ein Verfahren angegeben worden, das zur Zeit der Berechnung der zuzumessenden Kraftstoffmenge eine möglichst genaue Vorhersage der Luftfüllung des Zylinders ermöglicht, in den die Kraftstoffmenge eingespritzt wird.

Gemäß der Lehre der DE 44 01 828 A1 wird ein zukünftiges Lastsignal ermittelt, das die zu erwartende relative Luftfüllung repräsentiert. Das zukünftige Lastsignal wird aus einem aktuellen Hauptlastsignal, einem aktuellen Hilfslastsignal, das dem aktuellen Hauptlastsignal vorauseilt, und einem Kurbelwinkelintervall ermittelt. Das Kurbelwinkelintervall ist abhängig von der in Zeiteinheiten oder Kurbelwinkeleinheiten ausgedrückten Kraftstoff-Vorlagerung, der Dauer der Kraftstoff-Einspritzung und der Berechnungszeit vorgebbar. Die Einbeziehung des Kurbelwinkelintervalls hat den Vorteil, daß die Ermittlung des zukünftigen Lastsignals zum spätest möglichen Zeitpunkt durchgeführt werden kann und dadurch eine hohe Genauigkeit erreicht wird.

Zweckmäßig ist es, daß das zukünftige Lastsignal mit einem Tiefpaßfilter ermittelt wird, dessen Filterkonstante lastabhängig Vorgehbar ist. Die Filterkonstante wird bei steigender Last aus einer ersten Kennlinie ausgelesen und bei fallender Last aus einer zweiten Kennlinie. Dadurch wird eine besonders rechenzeitsparende Vorausbestimmung der Luftfüllung möglich.

Das Hilfslastsignal wird aus dem Öffnungswinkel der Drosselklappe, der Drehzahl der Brennkraftmaschine und einer gegebenenfalls durch einen Bypass-Kanal zur Drosselklappe strömenden Luftmenge ermittelt und abhängig von der Temperatur der angesaugten Luft und der bargmetrischen Höhe korrigiert.

Bei kleinen Öffnungswinkeln der Drosselklappe kann das Hilfslastsignal auch aus der mit einem Luftmassenmesser erfaßten Luftmasse ermittelt werden, was in der Regel zu einer höheren Genauigkeit in diesem Betriebsbereich führt.

Das Hauptlastsignal kann z. B. aus dem gemessenen Saugrohrdruck und der Drehzahl, aus der mit einem Luftmassenmesser erfaßten Luftmasse oder durch Filterung des Hilfslastsignals ermittelt werden.

Das Verfahren kann sowohl im nichtstationären Betrieb als auch im stationären Betrieb eingesetzt werden, da bei der Ermittlung des zukünftigen Lastsignals ein auf das Hauptlastsignal angeglichenes Hilfslastsignal verwendet wird. Der für den Abgleich des Hilfslastsignals benötigte Abgleichwert wird durch Integration der Abweichung zwischen dem Hauptlastsignal und dem mit dem Abgleichwert versehenen gefilterten Hilfslastsignal ermittelt. Das gefilterte Hilfslastsignal wird dabei durch Filterung des korrigierten Hilfslastsignals erzeugt.

Bei diesem bekannten Verfahren wird das zukünftige Lastsignal lediglich für die Ermittlung der einzuspritzenden Kraftstoffmenge verwendet.

Die der vorliegenden Erfindung zugrundeliegende Problematik besteht darin, daß Ottomotoren bei dynamischen Änderungen der Last eine gegenüber dem Stationärbetrieb verstärkte Klopfneigung aufweisen, der man üblicherweise durch Ausgabe eines sogenannten adaptiven Dynamikvorhalts, d.h. einer zusätzlichen Zündwinkelspätverstellung während der Dynamikphase zu begegnen versucht. Dieser zusätzliche Dynamikvorhalt wird ausgegeben, wenn der Lastgradient, d.h. die Momentangeschwindigkeit bzw. -steigung der Laständerung einen applizierbaren Schwellwert überschreitet. Der Dynamikvorhalt wird dann über eine applizierbare Zeit beibehalten und anschließend auf Null abgeregelt.

Als nachteilhaft bei dem obigen bekannten Ansatz hat sich die Tatsache herausgestellt, daß der Lastgradient als differentielle - also momentane - Größe keine Aussage über die während der gesamten folgenden Dynamikphase tatsächlich auftretende Laständerung enthält. Letztere ergibt sich im nachhinein aus der Integration des.Lastgradienten über der Zeit, was allerdings zur Festlegung des Dynamikvorhalts zu spät ist.

Das heißt nach üblicher Verfahrensweise ist die Ausgabe des Dynamikvorhalts nur davon abhängig, wie schnell sich die Last einem Zeitpunkt während der Dynamikphase ändert. Folglich wird bei einer kleinen schnellen Laständerung der gleiche Dynamikvorhalt ausgegeben wie bei einer großen und ebenso schnellen Laständerung.

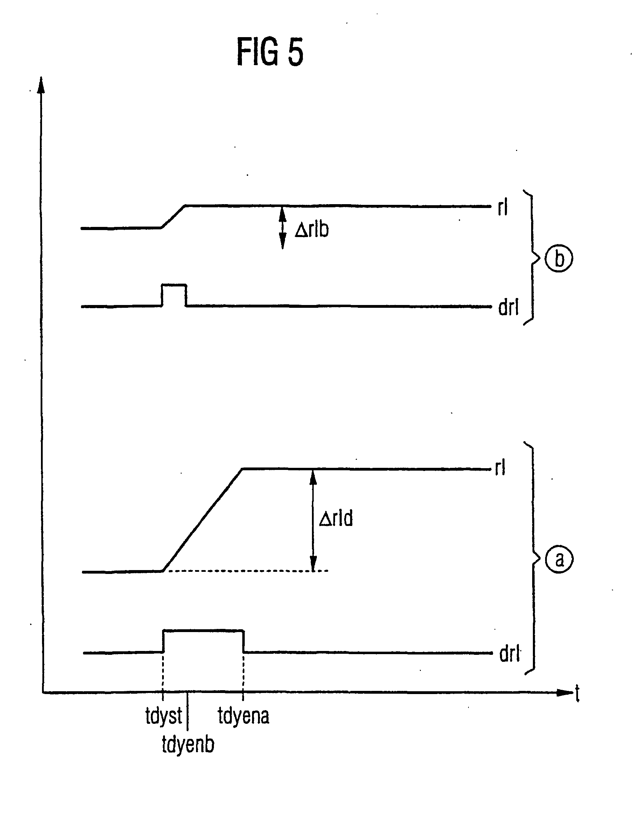

Dies ist in Fig. 5 illustriert. Dort bezeichnet t die Zeit, tdyst den Startzeitpunkt der Dynamikphase, tdyena den Endzeitpunkt der Dynamikphase für den Fall a, tdyenb den Endzeitpunkt der Dynamikphase für den Fall b, rl die Luftfüllung und drl den Luftfüllungsgradienten. Im Fall a liegt eine große schelle Luftfüllungsänderung $\Delta$rla vor, und im Fall b eine kleine ebenso schnelle Luftfüllungsänderung $\Delta$rlb.

Die innermotorischen thermischen Veränderungen, die die Klopfneigung beeinflussen, sind im Falle a jedoch viel stärker, und entsprechend müßte ein größerer Dynamikvorhalt erfolgen. Dies verlangt jedoch zum Zeitpunkt der Auslösung der Dynamik bereits, die zu erwartende integrierte Laständerung zu kennen. Eine solche Information steht bei existierenden Vorrichtungen zum Unterdrücken von Motorklopfen einer Brennkraftmaschine nicht zur Verfügung.

VORTEILE DER ERFINDUNG

Die erfindungsgemäße Vorrichtung mit den Merkmalen des Anspruchs 1 weist gegenüber den bekannten Lösungsansätzen den Vorteil auf, daß sie eine physikalisch basierte, dynamisch präzisere Festlegung des Dynamikvorhalts und damit eine bessere Unterdrückung vom Klopfen in der Dynamikphase ermöglicht.

Der vorgeschlagene Adaptionsalgorithmus führt zu genaueren Adaptionswerten und damit einem verbesserten Dynamikverhalten. Die Plausibilität der Adaptionswerte läßt sich besser beurteilen und vereinfacht damit das Applikationsverfahren.

In Verbesserung zum Stand der Technik wird vorgeschlagen, eine Festlegung des Dynamikvorhalts auf der Ebene einer vorhergesagten Lastsignal- bzw. Füllungssignaländerung vorzunehmen. Dabei sei erwähnt, daß Lastsignal und (Luft)füllungssignal hier synonym verwendet werden, da sie über einen einfachen Proportionalitätsfaktor mit-einander verknüpft sind.

Beispielsweise kann aus der gemäß Fahrpedalstellung und weiteren Eingangsgrößen ermittelten Drehmomentenanforderung eine Sollast bzw. Sollfüllung berechnet werden. Die Einstellung der Istlast auf die Solllast durch entsprechende Anstellung der Drosselklappe und ggfs. Ansteuerung des Turboladers erfolgt dabei verzögert. D.h. zum Zeitpunkt einer von der Momentenkoordination geforderten großen Laständerung eilt der.tatsächlich vorliegenden Füllung entsprehend hinterher. Es ist jedoch mit der vorhergesagten Lastdifferenz bereits zu diesem Zeitpunkt ein Maß für die in der Dynamikphase tatsächlich zu erwartende Laständerung vorhanden.

Das bedeutet, daß im Dynamikfall anstelle von einem den augenblicklichen Lastgradienten anzeigenden Signal die Differenz eines prädizierten Lastsignals und eines augenblicklichen Lastsignals zur Festlegung des Dynamikvorhalts herangezogen wird.

Der Betrag des Dynamikvorhalts wird besser als bisher den tatsächlichen physikalischen Bedürfnissen, d.h. Größe und Geschwindigkeit der Laständerung, angepaßt. Die Ausgabe ungerechtfertigt großer Dynamikvorhalte und damit einhergehend die Verschlechterung des Wirkungsgrades und des Ansprechverhaltens des Motors werden dadurch vermieden. Dabei können bereits vorhandene Größen der Motorsteuerung verwendet werden.

Damit wird eine wesentliche Ursache für Dynamikklopfen, die durch die heute verwendete Dynamikadaption der Klopfregelung nicht optimal berücksichtigt werden kann, beseitigt.

In den Unteransprüchen finden sich vorteilhafte Weiterbildungen und Verbesserungen.

Gemäß einer bevorzugten Weiterbildung ist die Korrektureinrichtung derart gestaltet, daß der Dynamikvorhalt von wenigstens einem erfaßten Betriebsparameter, vorzugsweise der Drehzahl, abhängig ist.

Gemäß einer weiteren bevorzugten Weiterbildung ist die Korrektureinrichtung derart gestaltet, daß sie die vorhergesagte Lastdifferenz durch Erfassen des Lastsignals zu einem vor dem festzulegenden Zündzeitpunkt liegenden Zeitpunkt; Vorhersagen eines zukünftigen Lastsignals zu einem späteren, vor dem festzulegenden Zündzeitpunkt liegenden Zeitpunkt; und Bilden der Differenz des zukünftigen Lastsignals und des Lastsignals ermittelt.

Gemäß einer weiteren bevorzugten Weiterbildung ist die Korrektureinrichtung derart gestaltet, daß sie das zukünftige Lastsignal aus einem aktuellen Hauptlastsignal, einem aktuellen Hilfslastsignal, das dem aktuellen Hauptlastsignal vorauseilt, und einem Kurbelwinkelintervall, das abhängig von der in Zeiteinheiten oder Kurbelwinkeleinheiten ausgedrückten Berechnungszeit vorgebbar ist, vorhersagt.

Gemäß einer weiteren bevorzugten Weiterbildung ist das aktuelle Hilfslastsignal aus dem Öffnungswinkel der Drosselklappe, der Drehzahl der Brennkraftmaschine und einer gegebenenfalls durch einen Bypass-Kanal zur Drosselklappe und/oder durch zusätzliche Bypass-Ventile strömenden Luftmenge ermittelbar.

Gemäß einer weiteren bevorzugten Weiterbildung ist das aktuelle Hauptlastsignal aus dem gemessenen Saugrohrdruck und der Drehzahl, aus der mit einem Luftmassenmesser erfaßten Luftmasse oder durch Filterung des aktuellen Hilfslastsignals ermittelbar.

Gemäß einer weiteren bevorzugten Weiterbildung ist die Korrektureinrichtung derart gestaltet, daß das Vorhersagen des zukünftigen Lastsignals unter Berücksichtigung der Nockenwellenverstellung und/oder der Abgasrückführung erfolgt.

Gemäß einer weiteren bevorzugten Weiterbildung ist die Dynamikphasen-Erfassungseinrichtung derart gestaltet, daß sie eine Dynamikphase der Brennkraftmaschine daraus erfaßt, daß der Lastgradient einen vorbestimmten Schwellwert übersteigt.

Gemäß einer weiteren bevorzugten Weiterbildung ist die Korrektureinrichtung derart gestaltet, daß sie die Lastdifferenz zum Zeitpunkt der Erfassung einer Dynamikphase vorhersagt.

Gemäß einer weiteren bevorzugten Weiterbildung ist eine Klopferfassungseinrichtung vorgesehen, welche derart gestaltet ist, daß während der Dynamikphase eine Klopfüberwachung durchführbar ist und abhängig vom Ergebnis der Klopfüberwachung eine Adaption des Dynamikvorhalts ausführbar ist.

Gemäß einer weiteren bevorzugten Weiterbildung ist die Korrektureinrichtung derart gestaltet, daß sie die am Beginn der Dynamikphase vorhergesagte Lastdifferenz mit einer am Ende der Dynamikphase erfaßten Lastdifferenz vergleicht und die Adaption nur dann ermöglicht, wenn die Differenz kleiner als ein vorbestimmter Wert ist.

ZEICHNUNGEN

Ausführungsbeispiele der Erfindung sind in den Zeichnungen dargestellt und in der nachfolgenden Beschreibung näher erläutert.

Es zeigen:

Fig. 1 das technische Umfeld einer Brennkraftmaschine 100, in der die vorliegende Erfindung einsetzbar ist;

Fig. 2 ein Diagramm, in dem das Hauptlastsignal tL (gestrichelte Linie) und das Hilfslastsignal tL' (durchgezogene Linie) über dem Kurbelwinkel w aufgetragen sind;

Fig. 3 ein Flußdiagramm für den prinzipiellen Ablauf einer ersten Ausführungsform der Erfindung;

Fig. 4 eine schematische Darstellung des zeitlichen Verlaufs der Luftfüllung und des Luftfüllungsgradienten zur Erläuterung einer zweiten Ausführungsform der Erfindung, und zwar im Fall c beim Eintritt der bei tdyst vorhergesagten Laständerung und im Fall d beim Nichteintritt der bei tdyst vorhergesagten Laständerung; und

Fig. 5 eine schematische Darstellung des zeitlichen Verlaufs der Luftfüllung und des Luftfüllungsgradienten, und zwar im Fall a bei einer großen schellen Laständerung und im Fall b bei einer kleinen ebenso schnellen Laständerung.

BESCHREIBUNG DER AUSFÜHRUNGSBEISPIELE

In den Figuren bezeichnen gleiche Bezugszeichen gleiche oder funktionsgleiche Komponenten.

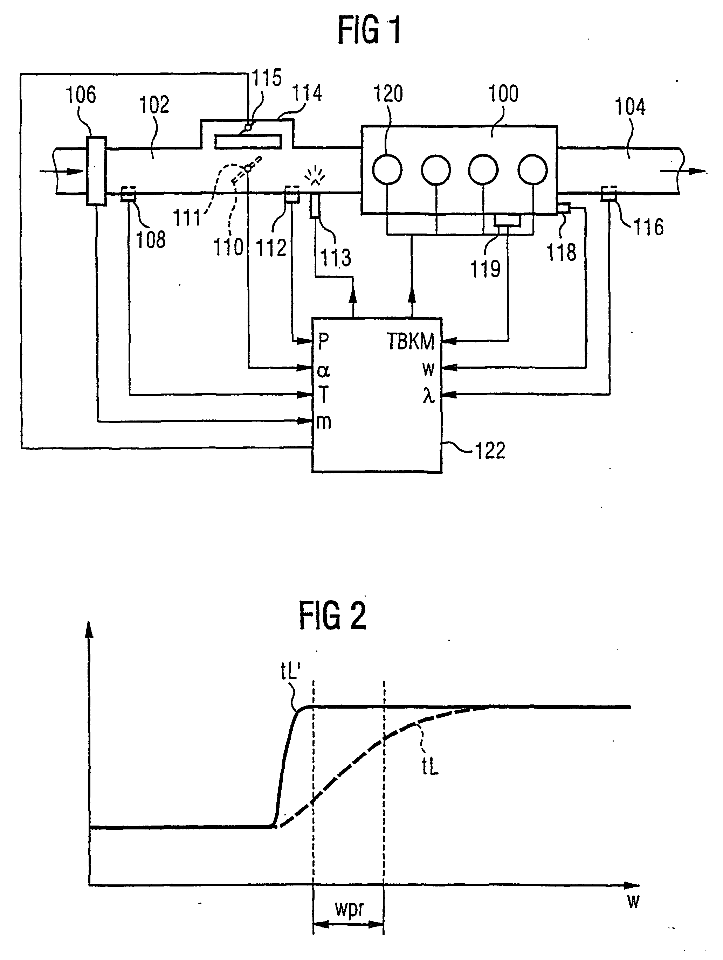

Fig. 1 zeigt das technische Umfeld einer Brennkraftmaschine 100, in der die vorliegende Erfindung einsetzbar ist.

Zunächst werden die illustrierten Komponenten zur Steuerung der Brennkraftmaschine 100 näher erläutert. Über einen Ansaugtrakt 102 wird der Brennkraftmaschine 100 ein Luft/Kraftstoff-Gemisch zugeführt, und die Abgase werden in einen 104 abgegeben. Im Ansaugtrakt 102 sind in Stromrichtung der angesaugten Luft gesehen ein Luftmengenmesser oder Luftmassenmesser 106, beispielsweise ein Hitzdraht-Luftmassenmesser, ein Temperaturfühler 108 zur Erfassung der Ansauglufttemperatur, eine Drosselklappe 110 mit einem Sensor 111 zur Erfassung des Öffnungswinkels der Drosselklappe 110, ein Drucksensor 112 und eine oder mehrere Einspritzdüsen 113 angebracht. In der Regel sind der Luftmengenmesser oder Luftmassenmesser 106 und der Drucksensor 112 alternativ vorhanden.

Um die Drosselklappe 110 herum führt ein Bypass-Kanal 114, in dem ein Leerlaufsteller 115 angeordnet ist. Der Bypass-Kanal 114 und der Leerlaufsteller 115 können entfallen, wenn die Regelung der Leerlaufdrehzahl mit Hilfe der Drosselklappe 110 erfolgt. Gegebenenfalls können zusätzlich Bypass-Ventile vorhanden sein, die beispielsweise beim Zuschalten einer Klimaanlage eine ausreichende Leerlaufdrehzahl sicherstellen. Im Abgaskanal 104 ist ein Sauerstoffsensor 116 angebracht. An der Brennkraftmaschine 100 sind ein Kurbelwinkelsensor 118 und ein Sensor 119 zur Erfassung der Temperatur der Brennkraftmaschine 100 angebracht. Weiterhin besitzt die Brennkraftmaschine 100 zur Zündung des Luft/Kraftstoff-Gemisches in den Zylindern beispielsweise vier Zündkerzen 120.

Die Ausgangssignale der beschriebenen Sensoren werden einem zentralen Steuergerät 122 übermittelt. Im einzelnen handelt es sich dabei um folgende Signale: Ein Signal m des Luftmengenmessers oder Luftmassenmessers 106, ein Signal T des Temperatursensors 108 zur Erfassung der Ansauglufttemperatur, ein Signal $\alpha$ des Sensors 111 zur Erfassung des Öffnungswinkels der Drosselklappe 110, ein Singal p des Drucksensors 112, ein Signal $\lambda$ des Sauerstoffsensors 116, ein Signal w des Kurbelwinkelsensors 118 und ein Signal TBKM des Sensors 119 zur Erfassung der Temperatur der Brennkraftmaschine 100. Das Steuergerät 122 wertet die Sensorsignale aus und steuert die Einspritzdüse bzw. Einspritzdüsen 113, den Leerlaufsteller 115 und den Zündzeitpunkt für die Zündkerzen 120 an.

Die Berechnung des Dynamikvorhalts muß zur Schließzeit $t_s$ der Zündspule abgeschlossen sein, also lange vor dem Füllungswinkel durchgeführt werden.

Für die Berechnung des Dynamikvorhalts soll allerdings die Luftfüllungsänderung verwendet werden, die durch die Differenz des beim Füllungswinkel vorliegende Hauptlastsignal tL und des beim Beginn der Dynamikphase vorliegenden Hauptlastsignals repräsentiert wird, d.h. es ist notwendig, die Füllungsdifferenz bzw. Lastdifferenz vorhersagen zu können.

Das aus der DE 44 01 828 A1 bekannte Verfahren ermöglicht eine näherungsweise Vorhersage des beim Füllungswinkel vorliegenden Lastsignals tL, das im folgenden als zukünftiges Lastsignal tLPr bezeichnet wird. Dabei wird insbesondere ausgenutzt, daß der Haupteinflußfaktor auf den Verlauf des zukünftigen Lastsignals tLPr, der Öffnungswinkel $\alpha$ der Drosselklappe 111, bekannt ist und daß das Signal $\alpha$ dem Signal tL um einiges vorauseilt. Näheres hierzu ist in Fig. 2 dargestellt.

Fig. 2 zeigt ein Diagramm, in dem das Hauptlastsignal tL (gestrichelte Linie) und das Hilfslastsignal tL' (durchgezogene Linie) über dem Kurbelwinkel w aufgetragen sind. Im stationären Betrieb fallen die Kurven für tL und tL' zusammen (links bzu. ganz rechts). Beim Übergang von niedriger zu hoher Last steigt die Kurve für tL' wesentlich schneller an als die Kurve für tL, so daß aus aktuellen Werten für tL' und tL zukünftige Werte für tL vorhergesagt werden können, d. h. aus dem aktuellen Hilfslastsignal tL' und dem aktuellen Hauptlastsignal tL kann das zukünftige Lastsignal tLPr ermittelt werden.

Für die Ermittlung des zukünftigen Lastsignals tLPr kann ein einfaches Saugrohrmodell zugrundegelegt werden, das durch einen Tiefpaß erster Ordnung mit einer lastabhängigen Filterkonstanten beschrieben wird. Beim aktuellen Kurbelwinkel w wird das beim zukünftigen Kurbelwinkel w + wPr vorliegende zukünftige Lastsignal tLPr gemäß folgender Gleichung vorhergesagt:

$$tLPr = tL(w+wPr) = tL(w) + (tL'(w)-tL(w)) \cdot (1-exp(-wPr/wF))$$

Dabei ist wPr der Vorhersagewinkel, das heißt die Differenz aus dem zukünftigen Kurbelwinkel, für den das zukünftige Lastsignal tLPr vorhergesagt wird - in der Regel ist dies der Füllungswinkel - und dem augenblicklichen Kurbelwinkel w.

Wie gesagt, ist eine Umwandlung zwischen Lastsignal tL und Füllungssignal rl trivial.

Bei der derzeit üblicherweise verwendeten Adaption und Ausgabe eines Dynamikvorhalts wkrdya, von dem die Erfindung ausgeht, wird mit Beginn der Dynamik zum Zeitpunkt tdyst, z.B. bei drl > Schwellwert, der Drehzahlbereich stkrnx, in dem sich die Brennkraftmaschine momentan befindet, ermittelt und in einem Register in Form eines RAM-Speichers abgespeichert. Der zu diesem Drehzahlbereich stkrnx in vorangegangenen Dynamikphasen adaptierte Dynamikvorhalt wkrdya wird aus dem RAM-Speicher ausgelesen und ausgegeben. Während der Dynamikphase ggfs. auftretende Klopfereignisse werden hinsichtlich ihrer Stärke in normale und starke Ereignisse klassifiziert. Aus dieser Klassifizierung wird am Ende der Dynamikphase zum Zeitpunkt tdyen, z.B. bei drl < Schwellwert, der Wert bestimmt, um den der ausgegebene Dynamikvorhalt ggfs. korrigiert werden muß, d.h. es wird unter bestimmten Bedingungen ein neuer Dynamikvorhalt für diesen Drehzahlbereich wkrdya' adaptiert. Für den Bereich, innerhalb dessen adaptiert werden darf, sind dabei Grenzen vorgegeben.

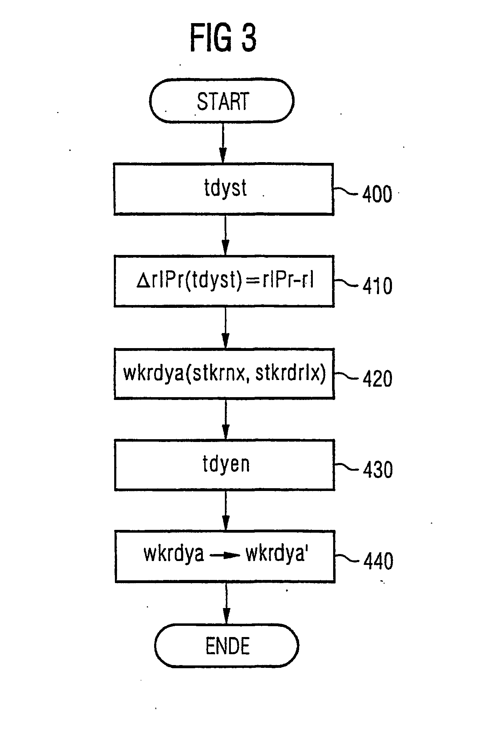

Fig. 3 zeigt ein Flußdiagramm für den prinzipiellen Ablauf einer ersten Ausführungsform der Erfindung.

Bei der ersten Ausführungsform der Erfindung wird der Adaptionsbereich zusätzlich zur Drehzahl in Form des Drehzahlbereiches stkrnx auch über die zu erwartende zum Zeitpunkt tdyst vorhergesagte Lastdifferenz $\Delta$rlPr = rlPr - rl in analoger Weise in Form eines Lastdifferenzbereiches stkrdrlx aufgespannt.

Zu diesem Zweck wird mit Erfassung des Beginns der Dynamik bei tdyst (Schritt 400) wie bisher der Drehzahlbereich stkrnx aus der aktuellen Drehzahl n ermittelt und gespeichert. Zusätzlich wird die erwartete Lastdifferenz $\Delta$rlPr rlPr - rl gebildet und gespeichert (Schritt 410).

Aus $\Delta$rlPr wird über eine entsprechende Kennlinie der entsprechende Lastdifferenzbereich stkrdrlx ermittelt und gespeichert. stkrnx und stkrdrlx adressieren nun den Adaptionsbereich, aus dem der Vorhalt wkrdya für die nachfolgende Dynamikphase ausgelesen wird (Schritt 420).

Dieser Wert kann optionellerweise noch mit einem temperaturabhängigen Faktor gewichtet und anschließend zur Weiterverarbeitung ausgegeben.

Während der Dynamik wird eine Klassifizierung auftretender Klopfereignisse durchgeführt, aus der beim erfaßten Ende der Dynamikphase zum Zeitpunkt tdyen (Schritt 430) der Wert bestimmt wird, um den der ausgegebene Dynamikvorhalt ggfs. korrigiert werden muß, um zu einem korrigierten Dynamikvorhalt wkrdya' für den nächsten Zyklus zu gelangen (Schritt 440). Damit ist der Durchlauf des Flußdiagramms beendet.

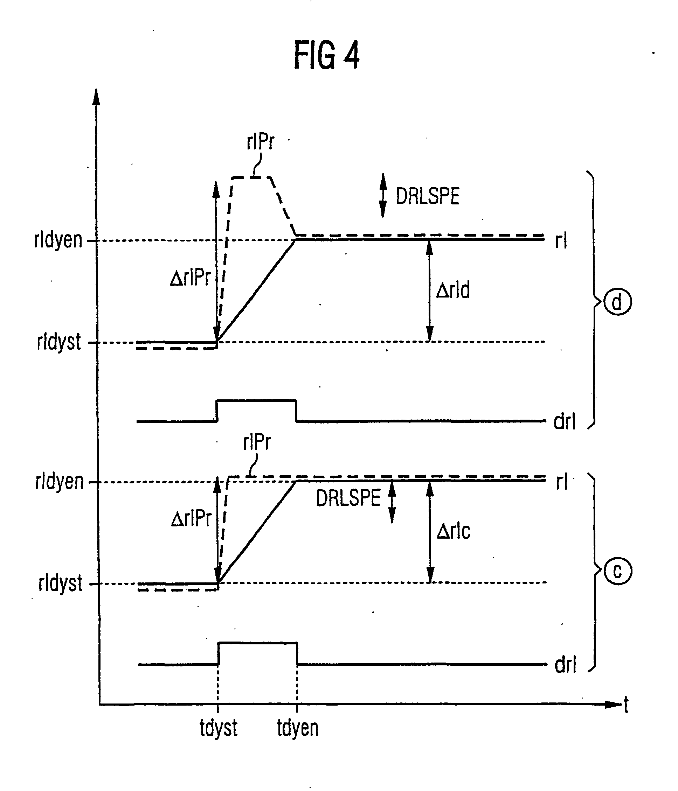

Fig. 4 zeigt eine schematische Darstellung des zeitlichen Verlaufs der Luftfüllung und des Luftfüllungsgradienten zur Erläuterung einer zweiten Ausführungsform der Erfindung, und zwar im Fall c beim Eintritt der bei tdyst vorhergesagten Laständerung und im Fall d beim Nichteintritt der bei tdyst vorhergesagten Laständerung.

Zusätzlich zur obigen ersten Ausführungsform erfolgt bei der zweiten Ausführungsform eine Plausibilisierung des Korrekturwertes in dem Sinne, daß die tatsächlich während der Dynamik aufgetretene Luftfüllungsännderung $\Delta$rl mit der vorausberechneten Luftfüllungsänderung $\Delta$rlPr in plausiblen (applizierbaren) Grenzen übereinstimmt.

Dazu wird gleichzeitig mit Beginn der Dynamik die Luftfüllung rl als rldyst in dem RAM-Speicher gespeichert. Ebenso wird am Ende der Dynamik wiederum die Luftfüllung rl als rldyen in dem RAM-Speicher gespeichert. Weicht die Luftfüllungsänderung $\Delta$rl = rldyen - rldyst höchstens um DRLSPE nach unten von der vorausberechneten Luftfüllungsänderung $\Delta$rlPr ab, so wird die Adaption erlaubt. D.h. der Akkumulator zur Neuberechnung eines Adaptionswertes wird nur dann aktiviert, wenn

$$DRLSPE + rldyen - rldyst >= \Delta rlPr$$

bzw.

$$rldyen - rldyst >= \Delta rlPr - DRLSPE$$

Anderenfalls ist eine Adaption nicht sinnvoll, da der aufgrund von $\Delta$rlPr ausgegebene Dynamikvorhalt nicht zur tatsächlich aufgetretenen Luftfüllungsänderung rldyen - rldyst paßt.

In Fig. 4 ist im Falle c $\Delta$rlc >= $\Delta$rlPr - DRLSPE, also eine Adaption sinnvoll, während im Fall d $\Delta$rld < $\Delta$rlPr - DRLSPE ist und eine Adaption unsinnig wäre.

Die Abregelgeschwindigkeit des Dynamikvorhalts nach Beendigung der Dynamik wird zweckmäßigerweise ebenfalls vom Vergleich DRLSPE + rldyen - rldyst >= $\Delta$rlPr abhängig gemacht. Ist die tatsächliche Laständerung um mindestens DRLSPE kleiner als vorhergesagt, so wird die Abregelgeschwindigkeit vergrößert, z.B. verdoppelt. Anderenfalls wird mit der normalen vorbestimmten Geschwindigkeit abgeregelt.

Bei noch einer weiteren, dritten Ausführungsform der Erfindung wird vorgeschlagen, den Adaptionsbereich lediglich über der zu erwartenden Luftfüllungsdifferenz $\Delta$rlPr in Form eines Lastdifferenzbereiches stkrdrlx aufzuspannen (also nicht über dem Drehzahlbereich). Für die Klopfneigung bei Dynamik ist gerade diese Größe maßgebend. Sie enthält implizit eine Drehzahlabhängigkeit in dem Sinne, daß die maximal mögliche Laständerung drehzahlabhängig ist. Eine weitere Drehzahlabhängigkeit tritt bezüglich des Temperatureinflusses auf. Der oben angeführte temperaturabhängige Wichtungsfaktor wird daher zweckmäßigerweise statt nur über der modellierten Temperatur evtmod am Einlaßventil zusätzlich über der Drehzahl n in Form eines Kennfeldes (n, evtmod) appliziert. Damit sollten die tatsächlichen Drehzahlabhängigkeiten an den physikalisch richtigen Stellen erfaßt werden. Das weitere Vorgehen entspricht demjenigen der ersten bzw. zweiten Ausführungsform.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist die Erfindung nicht auf die obige beispielhafte Vorhersageprozedur beschränkt. Beispielsweise kann der Aktualisierungsfehler der Zündwinkelberechnung durch die Verwendung von einem prädizierten Signal unter zusätzlicher Berücksichtigung von Nockenwellenverstellung und Abgasrückführung kompensiert werden.

Vorrichtung zum Unterdrücken von Motorklopfen einer Brennkraftmaschine

BEZUGSZEICHENLISTE:

| wPr | Vorhersagewinkel |
|-----|------------------|
| tL | Hauptlastsignal |

(fortgesetzt)

| | |
|---|---|
| tL' | Hilfslastsignal |
| w | Kurbelwinkel |
| t | Zeit |
| wF | Filterkonstante |
| tLPr | vorhergesagtes zukünftiges Lastsignal |
| n | Drehzahl |
| 100 | Brennkraftmaschine |
| 102 | Ansaugtrakt |
| 104 | Abgaskanal |
| 106 | Luftmassenmesser |
| 108 | Temperaturfühler |
| 110 | Drosselklappe |
| 111 | Sensor zur Erfassung des Öffnungswinkels der Drosselklappe 110 |
| 112 | Drucksensor |
| 113 | Einspritzdüsen |
| 114 | Bypass-Kanal |
| 115 | Leerlaufsteller |
| 116 | Sauerstoffsensor |
| 118 | Kurbelwinkelsensor |
| 119 | Temperatursensor |
| 120 | Zündkerzen |
| tdyst | Beginn Dynamikphase |
| tdyen | Ende Dynamikphase |
| $\Delta$rlPr | vorhergesagte Luftfüllungsdifferenz |
| rlPr | vorhergesagte Luftfüllung |
| rl | Luftfüllung |
| stkrnx | Drehzahlbereich |
| stkrdrlx | Lastdifferenzbereich |
| wkrdya | Dynamikvorhalt |
| wkrdya' | adaptierter Dynamikvorhalt |
| rldyst | Luftfüllung bei tdyst |
| rldyen | Luftfüllung bei tdyen |
| $\Delta$rl-a,b,c,d | tatsächliche Lastdifferenz |
| drl | Lastgradient |
| DRLSPE | Adaptionsschwelle |

**Patentansprüche**

1. Vorrichtung zum Unterdrücken von Motorklopfen in einer Brennkraftmaschine in dynamischen Betriebszuständen mit:

einer Erfassungseinrichtung, die mindestens einen Betriebsparameter der Brennkraftmaschine erfasst,
einer Steuereinheit, die einen Zündwinkel in Abhängigkeit von dem mindestens einen erfassten Betriebsparameter berechnet, und dabei im dynamischen Betriebszustand einen Dynamikvorhalt (wkrdya) berücksichtigt,
einer Klopfüberwachungs-Einrichtung, die eine Stärke von Klopfereignissen erfasst,
einer Dynamikphasen-Erkennungseinrichtung, die einen dynamischen Betriebszustand der Brennkraftmaschine erkennt, wobei

die Steuereinheit aus dem mindestens einen Betriebsparameter ein aktuelles Lastsignal (tL,rl), ein zukünftiges Lastsignal (tLPr,rlPr) sowie die Lastdifferenz aus aktuellem Lastsignal und zukünftigem Lastsignal (ΔrlPr = rl - rlPr) berechnet,
und dabei der Dynamikvorhalt (wkrdya) aus einem in dem Steuergerät gespeicherten Kennfeld liest, wobei der jeweilige Dynamikvorhalt (wkrdya) aus einem Kennfeldbereich gelesen wird, dessen Lastdifferenzbereich (stkrdrlx) einer aktuellen Lastdifferenz (☐rlPr) entspricht, **dadurch gekennzeichnet, dass** der jeweilige Wert des Dynamikvorhalts im Kennfeld am Ende eines dynamischen Betriebszustands entsprechend der Stärke der mittels der Klopfüberwachungs-Einrichtung erfassten Klopfereignisse angepasst wird.

2. Vorrichtung nach Anspruch 1, **dadurch gekennzeichnet, dass** die Erfassungseinrichtung als Betriebsparameter die Drehzahl (n) und/oder die Ansauglufttemperatur und/oder der Öffnungswinkel der Drosselklappe und/oder den Saugrohrdruck und/oder die Menge oder Masse angesaugter Luft und/oder den Kurbelwinkel und/oder die Temperatur der Brennkraftmaschine ermittelt.

3. Vorrichtung nach Anspruch 2, **dadurch gekennzeichnet, dass** die in dem Kennfeld enthaltenen Werte für den Dynamikvorhalt zusätzlich Drehzahlbereichen (stkrnx) zugeordnet sind, wobei der jeweilige Dynamikvorhalt (wkrdya) aus einem Kennfeldbereich gelesen wird, dessen Drehzahlbereich (stkrnx) der aktuellen Drehzahl (n) entspricht.

4. Vorrichtung nach einem der vorhergehenden Ansprüche, **dadurch gekennzeichnet, dass** die Dynamikphasen-Erkennungseinrichtung den dynamische Betriebszustand der Brennkraftmaschine dann erkennt, wenn der Lastgradient einen vorbestimmten Schwellwert über-schreitet.

5. Vorrichtung nach einem der vorhergehenden Ansprüche, **dadurch gekennzeichnet, dass** die Steuereinheit das zukünftige Lastsignal aus einem aktuellen Hauptlastsignal (tL), einem aktuellen Hilfslastsignal (tL'), das dem aktuellen Hauptlastsignal vorauseilt, und einem Kurbelwinkelintervall (wPr) berechnet, das abhängig von der in Zeiteinheiten oder Kurbelwinkeleinheiten ausgedrückten Berechnungszeit (wB) vorgegeben ist.

6. Vorrichtung nach Anspruch 5, **dadurch gekennzeichnet, dass** das aktuelle Hilfslastsignal (tL') aus dem Öffnungswinkel (α) der Drosselklappe (110), der Drehzahl (n) der Brennkraftmaschine und einer gegebenenfalls durch einen Bypass-Kanal (114) zur Drosselklappe (110) und/oder durch zusätzliche Bypass-Ventile strömende Luftmenge (qLL) ermittelt wird.

7. Vorrichtung nach Anspruch 5 oder 6, **dadurch gekennzeichnet, dass** das aktuelle Hauptlastsignal (tL) aus dem gemessenen Saugrohrdruck (p) und der Drehzahl (n), aus der mit einem Luftmassenmesser (106) erfassten Luftmasse (m) oder durch Filterung des aktuellen Hilfslastsignals (tL') ermittelt wird.

8. Vorrichtung nach einem der vorhergehenden Ansprüche, **dadurch gekennzeichnet, dass** die Ermittelung des zukünftigen Lastsignals (tLPr,rlPr) unter Berücksichtigung der Nockenwellenverstellung und/oder der Abgasrückführung erfolgt.

9. Vorrichtung nach einem der vorhergehenden Ansprüche, **dadurch gekennzeichnet, dass** die Steuereinheit die Lastdifferenz (ΔrlPr) zum Zeitpunkt der Erfassung des dynamischen Betriebszustands ermittelt.

10. Vorrichtung nach einem der vorhergehenden Ansprüche, **dadurch gekennzeichnet, dass** die Steuereinheit die am Beginn des dynamischen Betriebszustands erfasste Lastdifferenz mit einer am Ende des dynamischen Betriebszustands erfassten Lastdifferenz vergleicht und der im jeweiligen Kennfeldbereich gespeicherte Wert des Dynamikvorhalts im Kennfeld am Ende eines dynamischen Betriebszustands nur dann angepasst, wenn die Differenz der Lastdifferenzen aus Beginn und Ende des dynamischen Betriebszustands kleiner als ein vorbestimmter Wert ist.

**EP 1 147 309 B1**

**Claims**

1. Device for suppressing engine knocking in an internal combustion engine in dynamic operating states, with:

   a detecting device, which detects at least one operating parameter of the internal combustion engine,
   a control unit, which calculates an ignition angle dependent on the at least one detected operating parameter, and thereby takes a dynamic advance (wkrdya) into account in the dynamic operating state,
   a knocking monitoring device, which detects an intensity of knocking events,
   a dynamic-phase recognition device, which recognizes a dynamic operating state of the internal combustion engine,
   the control unit calculating from the at least one operating parameter an instantaneous load signal (tL,rl), a future load signal (tLPr,rlPr) and the load difference from the instantaneous load signal and the future load signal ($\Delta$rlPr = rl-rlPr),
   and thereby reads the dynamic advance (wkrdya) from a characteristic map stored in the control unit, the respective dynamic advance (wkrdya) being read from a characteristic map region for which the load difference range (stkrdrlx) corresponds to an instantaneous load difference ($\Delta$rlPr), **characterized in that** the respective value of the dynamic advance in the characteristic map is adapted at the end of a dynamic operating state in accordance with the intensity of the knocking events detected by means of the knocking monitoring device.

2. Device according to Claim 1, **characterized in that** the detecting device determines as operating parameters the rotational speed (n) and/or the intake air temperature and/or the opening angle of the throttle valve and/or the intake pipe pressure and/or the quantity or mass of intake air and/or the crank angle and/or the temperature of the internal combustion engine.

3. Device according to Claim 2, **characterized in that** the values contained in the characteristic map for the dynamic advance are additionally assigned to the rotational speed ranges (stkrnx), the respective dynamic advance (wkrdya) being read from a characteristic map region having a rotational speed range (stkrnx) corresponding to the instantaneous rotational speed (n).

4. Device according to one of the preceding claims, **characterized in that** the dynamic-phase recognition device recognizes the dynamic operating state of the internal combustion engine when the load gradient exceeds a predetermined threshold value.

5. Device according to one of the preceding claims, **characterized in that** the control unit calculates the future load signal from an instantaneous main load signal (tL), an instantaneous auxiliary load signal (tL'), which runs ahead of the instantaneous main load signal, and a crank angle interval (wPr), which is predetermined on the basis of the calculation time (wB), expressed in time units or crank angle units.

6. Device according to Claim 5, **characterized in that** the instantaneous auxiliary load signal (tL') is determined from the opening angle ($\alpha$) of the throttle valve (110), the rotational speed (n) of the internal combustion engine and a quantity of air (qLL) possibly flowing through a bypass channel (114) to the throttle valve (110) and/or through additional bypass valves.

7. Device according to Claim 5 or 6, **characterized in that** the instantaneous main load signal (tL) is determined from the measured intake pipe pressure (p) and the rotational speed (n), from the mass of air (m) detected with an air mass meter (106) or by filtering the instantaneous auxiliary load signal (tL').

8. Device according to one of the preceding claims, **characterized in that** the determination of the future load signal (tLPr, rlPr) takes place with the camshaft adjustment and/or the exhaust gas recirculation taken into account.

9. Device according to one of the preceding claims, **characterized in that** the control unit determines the load difference ($\Delta$rlPr) at the point in time when the dynamic operating state is detected.

10. Device according to one of the preceding claims, **characterized in that** the control unit compares the load difference detected at the beginning of the dynamic operating state with a load difference detected at the end of the dynamic operating state and adapts the dynamic advance value stored in the respective characteristic map region in the characteristic map at the end of a dynamic operating state only if the difference of the load differences from the beginning and end of the dynamic operating state is smaller than a predetermined value.

**Revendications**

1. Dispositif permettant de supprimer le cognement dans un moteur à combustion interne dans des états de fonctionnement dynamiques, comprenant :

   - un dispositif d'enregistrement qui enregistre au moins un paramètre de fonctionnement du moteur à combustion interne,
   - une unité de commande qui calcule un angle d'allumage en fonction d'au moins un paramètre de fonctionnement du moteur à combustion interne en prenant en compte, dans l'état de fonctionnement dynamique, une dérivée dynamique (wkrdya),
   - un dispositif de surveillance du cognement qui enregistre la force des événements de cognement,
   - un dispositif de détection des phases dynamiques qui détecte un état de fonctionnement dynamique du moteur à combustion interne, où l'unité de commande calcule, à partir d'au moins un paramètre de fonctionnement, un signal de charge actuel (tL,rl), un signal de charge futur (tLPr,rlPr), ainsi que la différence de charge entre le signal de charge actuel et le signal de charge futur ($\Delta$rlPr = rl - rlPr), et lit alors la dérivée dynamique (wkrdya) à partir d'une caractéristique stockée dans l'appareil de commande, la dérivée dynamique respective (wkrdya) étant lue à partir d'une zone de la caractéristique dont la plage de différence de charge (stkrdrlx) correspond à une différence de charge actuelle ($\Delta$ rlPr),

   **caractérisé en ce que**
   la valeur respective de la dérivée dynamique dans la caractéristique, à la fin d'un état de fonctionnement dynamique, est adaptée en fonction de la force des événements de cognement enregistrés au moyen du dispositif de surveillance du cognement.

2. Dispositif selon la revendication 1,
   **caractérisé en ce que**
   le dispositif d'enregistrement détermine en tant que paramètre de fonctionnement le régime (n) et/ou la température de l'air d'admission et/ou l'angle d'ouverture du papillon des gaz et/ou la pression régnant dans la tubulure d'admission et/ou le débit ou la masse d'air admis et/ou l'angle de vilebrequin et/ou la température du moteur à combustion interne.

3. Dispositif selon la revendication 2,
   **caractérisé en ce que**
   les valeurs de dérivée dynamique contenues dans la caractéristique sont en outre associées à des plages de régime (stkrnx), la dérivée dynamique respective (wkrdya) étant lue à partir d'une zone de la caractéristique dont la plage de régime (stkrnx) correspond au régime actuel (n).

4. Dispositif selon l'une des revendications précédentes,
   **caractérisé en ce que**
   le dispositif de détection des phases dynamiques détecte l'état de fonctionnement dynamique du moteur à combustion interne lorsque le gradient de charge dépasse une valeur de seuil prédéterminée.

5. Dispositif selon l'une des revendications précédentes,
   **caractérisé en ce que**
   l'unité de commande calcule le signal de charge futur à partir d'un signal de charge principal actuel (tL), d'un signal de charge auxiliaire actuel (tL') précédant le signal de charge principal actuel, et d'un intervalle d'angle de vilebrequin (wPr), prédéterminé en fonction du temps de calcul exprimé en unités de temps ou en unités d'angle de vilebrequin.

6. Dispositif selon la revendication 5,
   **caractérisé en ce que**
   le signal de charge auxiliaire actuel (tL') est déterminé à partir de l'angle d'ouverture ($\alpha$) du papillon des gaz (110), du régime (n) du moteur à combustion interne et d'un débit d'air (qLL) s'écoulant le cas échéant à travers un canal de dérivation (114) jusqu'au papillon des gaz (110) et/ou à travers des soupapes de dérivation supplémentaires.

7. Dispositif selon la revendication 5 ou 6,
   **caractérisé en ce que**
   le signal de charge principal actuel (tL) est déterminé à partir de la pression mesurée dans la tubulure d'admission (p) et du régime (n), à partir de la masse d'air (m) enregistrée par un débitmètre d'air massique (106), ou par la filtration du signal de charge auxiliaire actuel (tL').

8. Dispositif selon l'une des revendications précédentes, **caractérisé en ce que** la détermination du signal de charge futur (tLPr,rlPr) s'effectue en prenant en compte le déplacement de l'arbre à cames et/ou le réacheminement des gaz d'échappement.

9. Dispositif selon l'une des revendications précédentes, **caractérisé en ce que** l'unité de commande détermine la différence de charge ($\Delta$lPr) au moment de l'enregistrement de l'état de fonctionnement dynamique.

10. Dispositif selon l'une des revendications précédentes, **caractérisé en ce que** l'unité de commande compare la différence de charge enregistrée au début de l'état de fonctionnement dynamique avec une différence de charge enregistrée à la fin de l'état de fonctionnement dynamique et adapte la valeur de dérivée dynamique dans la caractéristique, stockée dans la zone de la caractéristique respective, à la fin d'un état de fonctionnement dynamique, uniquement lorsque la différence entre les différences de charge au début et à la fin de l'état de fonctionnement dynamique est inférieure à une valeur prédéterminée.

# FIG 1

# FIG 2

## FIG 3

START

tdyst — 400

$\Delta rlPr(tdyst) = rlPr - rl$ — 410

wkrdya(stkrnx, stkrdrlx) — 420

tdyen — 430

wkrdya ⟶ wkrdya' — 440

ENDE

# FIG 4

# FIG 5